**Europäisches Patentamt**

**European Patent Office**

**Office européen des brevets**

(19)

(11) Veröffentlichungsnummer: **0 129 650
B1**

(12) # EUROPÄISCHE PATENTSCHRIFT

(45) Veröffentlichungstag der Patentschrift:
**08.10.86**

(51) Int. Cl.⁴: **G 01 F 23/22,** G 01 F 23/26

(21) Anmeldenummer: **84103891.2**

(22) Anmeldetag: **07.04.84**

(54) **Einrichtung zum elektrischen Messen eines Flüssigkeitsniveaus.**

(30) Priorität: **15.06.83 DE 3321559**

(43) Veröffentlichungstag der Anmeldung:
**02.01.85 Patentblatt 85/1**

(45) Bekanntmachung des Hinweises auf die Patenterteilung:
**08.10.86 Patentblatt 86/41**

(84) Benannte Vertragsstaaten:
**DE FR GB IT NL SE**

(56) Entgegenhaltungen:
**DE - A - 3 108 969
DE - A - 3 137 153
DE - A - 3 235 534**

(73) Patentinhaber: **VDO Adolf Schindling AG,
Gräfstrasse 103, D-6000 Frankfurt/Main (DE)**

(72) Erfinder: **Kant, Bernhard, Berliner Strasse 9,
D-6236 Eschborn (DE)**

(74) Vertreter: **Könekamp, Herbert, Dipl.-Ing. et al, Sodener
Strasse 9, D-6231 Schwalbach (DE)**

## Beschreibung

Die Erfindung bezieht sich auf eine Einrichtung zum elektrischen Messen des Niveaus einer in einem Behälter enthaltenen Flüssigkeit mit einer in die Flüssigkeit eingetauchten, von einem Schutzrohr umschlossenen Leiterfolie, wie einer temperaturabhängigen elektrisch fremd beheizten Widerstandsfolie, deren von einer Auswerteschaltung erfassbarer Gesamtwiderstand von dem Flüssigkeitsniveau im Behälter abhängig ist oder einer zwei einen Kondensator bildenden, Leiter tragenden Kapazitätsfolie, wobei die Leiterfolie bandartig ausgebildet und durch an einer ihrer Längskanten angreifende Halteelemente wendelförmig, beidseitig an ihrer Oberfläche von der Flüssigkeit umspülbar in dem Schutzrohr gehalten ist und wobei die Längskanten der Leiterfolie durch eine entsprechend grosse Steigung von Windung zu Windung gegenseitigen Abstand haben.

Eine solche Messeinrichtung ist Gegenstand des Patents DE-C-3 235 534, das eine Priorität vom 25.9.82 hat und am 29.3.84 veröffentlicht wurde, und bei dem es in erster Linie darauf ankam, eine Einrichtung zu schaffen, die eine Niveaumessung mit hoher Genauigkeit ermöglicht. Die gemäss dem obigen Patent vorgesehene wendelförmige Ausbildung der Leiterfolie ermöglicht eine wesentlich grössere Länge der Leiterfolie als es der linearen Eintauchtiefe entspricht. Dadurch wird die benetzbare Fläche der Leiterfolie gross, so dass das Auflösungsvermögen des Messbereiches entsprechend gross wird. Hiervon abgesehen erlaubt die wendelförmige Anordnung der Leiterfolie die Einrichtung als Ganzes in radialer Richtung in begrenztem Masse zu verbiegen, ohne dass es zu einer Beschädigung der Leiterfolie kommt.

Aus DE-AI-3 137 153 ist die eingangs beschriebene Messeinrichtung — abgesehen von der Variante mit der Kapazitätsfolie — bekannt.

Behälter, in denen ein Flüssigkeitsniveau gemessen werden muss, sind oft recht unregelmässig geformt. Kraftfahrzeugtanks haben häufig sehr komplizierte Formen, um den vorhandenen Platz optimal auszunutzen und ein möglichst grosses Tankvolumen zu ermöglichen. Solche Behälterausbildungen schliessen es oft aus, dass die Einrichtung zum elektrischen Messen des Flüssigkeitsniveaus geradlinig bis zur tiefsten Behälterstelle verlaufen kann. Es ist dann erforderlich, das Schutzrohr mit der Leiterfolie stärker zu verbiegen, damit es der Behälterkonstruktion folgen kann. Bei der Einrichtung gemäss dem obigen Patent war diese mögliche Biegsamkeit nicht in allen Fällen ausreichend.

Der Erfindung liegt die Aufgabe zugrunde, eine Einrichtung der eingangs genannten Art so weiterzuentwickeln, dass unter Beibehaltung der hohen Messgenauigkeit ein radiales Verbiegen des Schutzrohres mit eingebauter Leiterfolie in möglichst grossem Masse möglich wird. Diese Aufgabe wird erfindungsgemäss durch die Merkmale des Anspruchs 1 gelöst.

Dank der erfindungsgemässen Ausbildung ist das Schutzrohr 1 nur zwischen die einzelnen Gänge der Leiterfolie begrenzenden Längskanten der Leiterfolie biegsam. Dadurch kann das Schutzrohr in beträchtlichem Masse verbogen werden, ohne dass die Leiterfolie unzulässig stark gebogen werden muss und dadurch krumpeln oder reissen kann. Die erfindungsgemässe Einrichtung bedingt kein kompliziert geformtes Schutzrohr, vielmehr kann es sich bei diesem um ein einfaches, durch Extrusion oder Spritzgiessen geformtes Kunststoffrohr handeln.

Von Vorteil ist es, wenn der biegsame Schutzrohrbereich zumindest einen u-förmig radial nach innen oder aussen verlaufenden Rohrabschnitt hat. Auf diese Weise wird die Biegsamkeit des Schutzrohres mit einfachen Mitteln in dem gewünschten Bereich erreicht. Ein Verbiegen des Schutzrohres ist mit geringem Kraftaufwand möglich.

Ein besonders leichtes Verbiegen des Schutzrohres mit montierter Leiterfolie ist durch die im Anspruch 3 angegebenen Merkmale möglich. Die nach innen gerichteten u-förmigen Rohrabschnitte bilden Anlagekanten für die Längskanten der Leiterfolie. Dadurch kann die Leiterfolie leicht von einer Stirnseite her in das Schutzrohr eingeschoben werden.

Eine unerwünscht grosse Beanspruchung der Leiterfolie durch Biegekräfte kann zuverlässig ausgeschlossen werden, wenn das Schutzrohr, wie im Anspruch 4 angegeben, ausgebildet ist. Die Folienanlagebereiche stützen die Leiterfolie gut ab und ermöglichen eine rasche Montage.

Zur Erzielung einer hohen Messgenauigkeit ist es erforderlich, dass die Leiterfolie allseitig umspült wird. Dies ist leicht zu verwirklichen, indem in die biegesteifen Schutzrohrabschnitte Durchflussöffnungen vorgesehen werden.

Wenn man koaxial in dem Schutzrohr der erfindungsgemässen Einrichtung ein Entnahmerohr anordnen will, dann muss dieses Entnahmerohr durch Distanzstücke am Schutzrohr gehalten sein, damit es nirgends die Leiterfolie berühren kann. Die erfindungsgemässen nach innen gerichteten Rohrabschnitte vermögen eine Doppelfunktion auszuüben. Abgesehen davon, dass sie den Biegebereich festlegen, können sie dazu dienen, das Schutzrohr zu distanzieren.

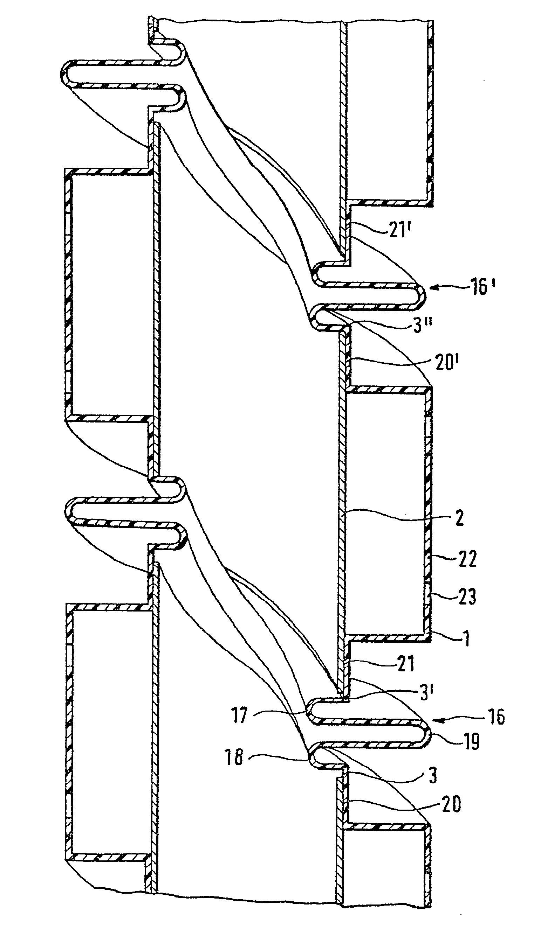

Die Erfindung lässt zahlreiche Ausführungsmöglichkeiten zu. Zur Verdeutlichung ihres Grundprinzips ist eine davon schematisch in der Zeichnung dargestellt und wird nachfolgend beschrieben. Diese zeigt einen Längsschnitt durch einen erfindungsgemäss gestalteten Teilbereich eines Schutzrohres mit Leiterfolie einer Einrichtung zum elektrischen Messen des Niveaus einer Flüssigkeit.

Die Zeichnung zeigt ein Schutzrohr 1, in das eine bandartige Leiterfolie 2 mit Längskanten 3 wendelförmig angeordnet ist.

Die Steigung der Leiterfolie 2 von Windung zu Windung ist derart gross, dass zwischen den Längskanten 3, 3', 3'' ausreichend viel Abstand ist, um dort einen wendelförmig verlaufenden biegsamen Schutzrohrbereich 16, 16' vorsehen zu können. Dieser Schutzrohrbereich 16, 16' besteht aus zwei radial nach innen gerichteten u-förmigen Rohrabschnitten 17, 18 und einem dazwischen angeordneten nach aussen gerichteten u-förmigen Rohrabschnitt 19.

Beiderseits des biegsamen Schutzrohrbereiches 16, 16' hat das Schutzrohr 1 jeweils einen kurzen axial verlaufenden Folienanlagebereich 20, 21, 20', gegen den die Leiterfolie 2 anliegt. Der Übergang von den Folienanlagebereichen 20, 21 zum Rohrabschnitt 17, 18 erfolgt jeweils durch eine schroffe 90 Grad-Umbiegung, damit die Folie 2 vor allem beim Einschieben in das Schutzrohr 1 sich auf den Rohrabschnitten 17, 18 mit ihren Längskanten 3, 3', 3'' abstützen kann. Diese Folienbereiche 21, 20' zwischen den biegsamen Schutzrohrbereichen 16, 16' sind jeweils durch einen radial zurückspringenden biegesteifen Schutzrohrabschnitt 22 verbunden. Um zu erreichen, dass Flüssigkeit gegen die Aussenmantelfläche der Leiterfläche 2 gelangen kann, sind im Schutzrohrabschnitt 22 Durchlassöffnungen 23 vorgesehen.

Der Einbau der Leiterfolie 2 in das Schutzrohr 1 ist auch bei grösserer Schutzrohrlänge leicht möglich. Man braucht die Leiterfolie 2 lediglich auf zwei Folienanlagebereiche 20', 21 zwischen den biegsamen Schutzrohrbereichen 16, 16' zu legen und dann die Leiterfolie 2 von der Schturzrohrstirnseite her nachzuschieben. Die Leiterfolie 2 rutscht dann selbsttätig entlang des durch den biegsamen Schutzrohrbereich 16, 16' begrenzten wendelförmigen Folienanlagebereichs 20, 20'.

Die Rohrabschnitte 17, 18 dienen bei Anordnung eines nicht dargestellten Entnahmerohres im Inneren des Schutzrohres 1 dazu, dieses auf Abstand von der Leiterfolie 2 zu halten. Der Aussendurchmesser des Entnahmerohres muss hierzu geringfügig kleiner sein als der freie Querschnitt zwischen den nach innen gerichteten Rohrabschnitten 17, 18.

## Patentansprüche

1. Einrichtung zum elektrischen Messen des Niveaus einer in einem Behälter enthaltenen Flüssigkeit mit einer in die Flüssigkeit eingetauchten, von einem Schutzrohr (1) umschlossenen Leiterfolie (2), wie einer temperaturabhängigen elektrisch fremdbeheizten Widerstandsfolie, deren von einer Auswertschaltung erfassbarer Gesamtwiderstand von dem Flüssigkeitsniveau im Behälter abhängig ist, oder einer zwei einen Kondensator bildenden, Leiter tragenden Kapazitätsfolie, wobei die Leiterfolie (2) bandartig ausgebildet und durch an einer ihrer Längskanten (3, 3', 3'') angreifende Halteelemente wendelförmig, beidseitig an ihrer Oberfläche von der Flüssigkeit umspülbar in dem Schutzrohr (1) gehalten ist, wobei die Längskanten der Leiterfolie durch eine entsprechend grosse Steigung von Windung zu Windung gegenseitigen Abstand haben und wobei im genannten Abstand zwischen den Längskanten (3, 3', 3'') der Leiterfolie (2) im Schutzrohr (1) ein wendelförmig umlaufender biegsamer Schutzrohrbereich (16, 16') vorgesehen ist.

2. Einrichtung nach Anspruch 1, dadurch gekennzeichnet, dass der biegsame Schutzrohrbereich (16, 16') zumindest einen u-förmig radial nach innen oder aussen verlaufenden Rohrabschnitt (17, 18, 19) hat.

3. Einrichtung nach Anspruch 1 oder einem der vorhergehenden Ansprüche, dadurch gekennzeichnet, dass der biegsame Schutzrohrbereich (16, 16') aus zwei nach innen gerichteten u-förmigen Rohrabschnitten (17, 18) und einem dazwischen angeordneten nach aussen gerichteten u-förmigen Rohrabschnitt (19) besteht.

4. Einrichtung nach Anspruch 1 oder einem der vorhergehenden Ansprüche, dadurch gekennzeichnet, dass das Schutzrohr (1) axial beiderseits des biegsamen Schutzrohrbereiches (16, 16') einen kurzen axial verlaufenden Folienanlagebereich (20, 20', 21) hat und dass diese Folienanlagebereiche (z.B. 20', 21) durch radial zurückspringende biegesteife Schutzrohrabschnitte (22) verbunden sind.

5. Einrichtung nach Anspruch 1 oder einem der vorhergehenden Ansprüche, dadurch gekennzeichnet, dass die biegesteifen Schutzrohrabschnitte (22) Durchflussöffnugnen (23) aufweisen.

6. Einrichtung nach Anspruch 1 oder einem der vorhergehenden Ansprüche, dadurch gekennzeichnet, dass die nach innen gerichteten u-förmigen Rohrabschnitte (17, 18) als Führung für ein in das Schutzrohr (1) geschobenes Entnahmerohr dienen.

## Claims

1. Device for the electrical measuring of the level of a liquid situated in a container, with a conductor foil (2), which is immersed in the liquid and is surrounded by a protective tube (1), such as a temperature-dependent electrically externally heated resistance foil whose total resistance detectable by an evaluation circuit is dependent on the liquid level in the container, or a capacitance foil carrying two conductors which form a capacitor, wherein the conductor foil (2) is made in the form of a band and, by means of holding elements engaging on one of its longitudinal edges (3, 3', 3''), is held helically in the protective tube (1) such that the liquid can wash about its surface at both sides, wherein the longitudinal edges of the conductor foil are spaced at an interval from one another by arranging a suitably large pitch from turn to turn, and wherein a helically encircling flexible protective tube region (16, 16') is provided in the said interval between the longitudinal edges (3, 3', 3'') of the conductor foil (2) in the protective tube (1).

2. Device according to Claim 1, characterised in that the flexible protective tube region (16, 16') has at least one tube portion (17, 18, 19) extending radially inwardly or outwardly in u-shaped manner.

3. Device according to Claim 1 or one of the preceding claims, characterised in that the flexible protective tube region (16, 16') consists of two inwardly directed u-shaped tube portions (17, 18) and an outwardly directed u-shaped tube portion (19) which is situated between said inwardly direction portions.

4. Device according to Claim 1 or one of the preceding claims, characterised in that the protective tube (1) comprises axially at both sides of the flexible protective tube region (16, 16') a short axially disposed foil abutment region (20, 20', 21) and that these foil abutment regions (e.g. 20', 21) are connected by radially set-back flexurally rigid protective tube portions (22).

5. Device according to Claim 1 or one of the preceding claims, characterised in that the flexurally rigid protective tube portions (22) comprise throughflow apertures (23).

6. Device according to Claim 1 or one of the preceding claims, characterised in that the inwardly directed u-shaped tube portions (17, 18) serve as guide means for a take-off tube inserted into the protective tube (1).

## Revendications

1. Dispositif pour mesurer électriquement le niveau d'un liquide renfermé par un récipient, comprenant une feuille conductrice (2) immergée dans le liquide et entourée par un tube protecteur (1), ainsi qu'une feuille dont la résistance dépend de la température, chauffée électriquement de l'extérieur et dont la résistance globale, pouvant être détectée par un circuit d'interprétation, dépend du niveau du liquide dans le récipient; ou une feuille capacitive portant deux conducteurs qui forment un condensateur, ladite feuille conductrice (2) étant réalisée sous la forme d'une bande et étant retenue hélicoïdalement dans le tube protecteur (1) par l'intermédiaire d'éléments de retenue en prise avec l'une de ses arêtes longitudinales (3, 3', 3''), en pouvant être balayée de part et d'autre sur sa surface par le liquide, les arêtes longitudinales de cette feuille conductrice étant espacées mutuellement par un pas de grandeur correspondante d'une spire à l'autre, une région souple (16, 16') du tube protecteur, s'étendant hélicoïdalement, étant prévue dans ce tube protecteur (1) selon l'espacement précité entre les arêtes longitudinales (3, 3', 3'') de la feuille protectrice (2).

2. Dispositif selon la revendication 1, caractérisé par le fait que la région souple (16, 16') du tube protecteur présente au moins un tronçon tubulaire (17, 18, 19) s'étendant radialement en U vers l'intérieur ou vers l'extérieur.

3. Dispositif selon la revendication 1 ou l'une des revendications précédentes, caractérisé par le fait que la région souple (16, 16') du tube protecteur se compose de deux tronçons tubulaires en U (17, 18) dirigés vers l'intérieur, ainsi que d'un tronçon tubulaire en U (19) qui est intercalé entre ces tronçons et est dirigé vers l'extérieur.

4. Dispositif selon la revendication 1 ou l'une des revendications précédentes, caractérisé par le fait que le tube protecteur (1) présente dans le sens axial, de part et d'autre de la région souple (16, 16') de ce tube protecteur, une courte région (20, 20', 21) d'appui de la feuille, qui s'étend axialement; et par le fait que ces régions (par exemple 20', 21) d'appui de la feuille sont solidarisées par des tronçons (22) du tube protecteur qui sont doués de rigidité à la flexion et font saillie radialement.

5. Dispositif selon la revendication 1 ou l'une des revendications précédentes, caractérisé par le fait que les tronçons (22) du tube protecteur doués de rigidité à la flexion présentent des orifices de circulation traversants (23).

6. Dispositif selon la revendication 1 ou l'une des revendications précédentes, caractérisé par le fait que les tronçons tubulaires en U (17, 18) dirigés vers l'intérieur servent de guidage pour un tube de prélèvement glissé dans le tube protecteur (1).